# EUROPEAN PATENT APPLICATION

(11) **EP 0 589 119 A1**
(43) Date of publication of application: **30.03.1994**
(21) Application number: 92480134.3
(22) Date of filing: 25.09.1992
(51) Int. Cl.: B07C 3/10

(54) **System and method for improving processing of OCR scanned mail**

(71) Applicant: International Business Machines Corporation, Armonk, N.Y. 10504 (US)
(72) Inventor: Rosenbaum, Walter, F-75116 Paris (FR)
(74) Representative: Lattard, Nicole

(57) **Abstract**

The invention provides a system and method for improving processing of Optical Read Character (OCR) scanned mail. Such an automatic mail processing is vested with an interactive learning capability. Ambiguous envelope address blocks and information fields are resolved using a unique mode of human/machine interaction that achieves a sustained high rate of automatic mail sortation.

## Description

This invention relates to the area of automatic mail processing and more particularly to an improvement in the use of Optical Character Recognition (OCR) in mail processing.

Worldwide nowadays, several hundred billion pieces of mail are delivered by National Postal Services. The volume of mail is ever growing at a compound rate of approximately 5% a year.

To handle such massive volume of mail, several methods utilizing automatic means have been experimented with and installed on a limited operational basis. Quite often, those automatic means revolve around OCR. This is the case in the processing system and method disclosed in US Patent 5,031,223 issued on July 9th, 1991 and assigned to International Business Machines Corporation having headquarters in the State of New-York, USA, the teaching of which will be incorporated hereafter by reference.

A current process of automatic mail sortation can be conceptualized into phases:
Phase 1, image scan and acquisition: it is mainly a hardware pursuit wherein the face of an envelope is scanned to 'lift' a replica of what is printed into an electronic facsimile that can be acted upon by computerized logic.
Phase 2, analysis of image data: the areas of interest are looked for amongst all other information on the electronic facsimile of the face of the envelope.
Phase 3, interpretation of image data: it is being sought to delineate and interpret information fields in the address block corresponding to destination inclusive of city, street and recipient.
Phase 4, mail sortation: the information obtained in phase 3 results in the mail pieces being mechanically separated to the desired level to facilitate delivery.

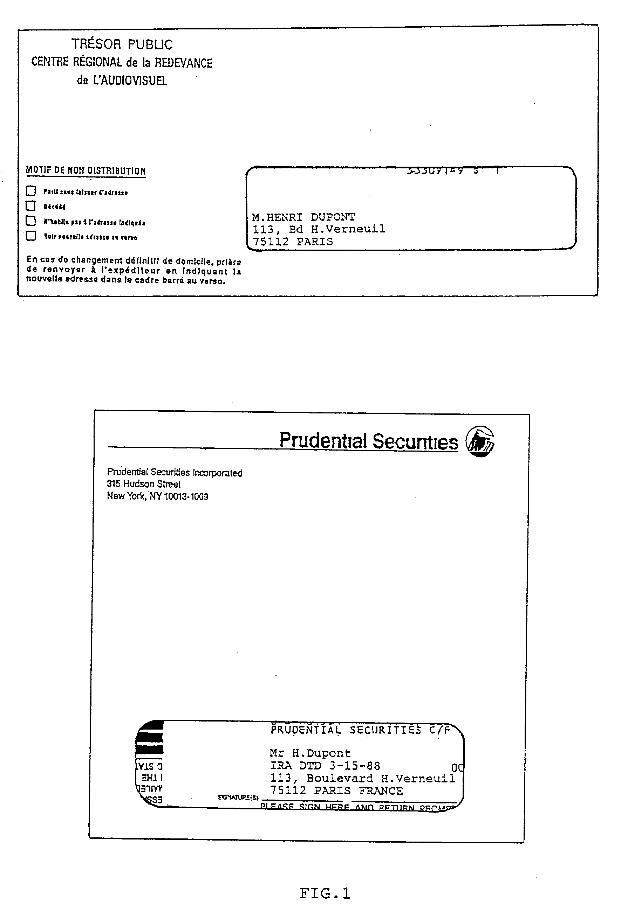

In phase 2 and 3, the mail processing system must do sophisticated 'pattern recognition and matching' to find the location of address information even when confronted with 'interference' i.e. when the areas of interest are lost on the face of the envelope amongst a multitude of useless information fields. See for example FIG.1 with commercial and public utility mail showing non standard format and extraneous information. Once an address location has been determined and the character information fields discerned and optically recognized, the constituent address fields must be found despite these non standard format or extraneous information.

It is unfortunately the current status that OCR is prone to misread characters and on occasion has difficulty in discerning lines in the address block and, when there is interference on the face of the envelope, is unable to find the address box. When a misread occurs, the mail piece cannot be properly sorted and is rejected from the automatic process.

Those mail pieces that fail automatic processing are sent to off-line LAN terminals/code desks. Using commercial PS/2 hardware, address image is shown to an operator to rekey the address information required to effect sortation. Resolved mail can then be rerouted to the main line OCR sequence.

Very frequently however, codedesk operators get 'serial rejects' from a large volume mailer (such as a commercial or a public utility one) where literally hundreds of envelopes fail for the same format related reason: the automatic process is at that point being drastically affected, where each and every following piece of mail in the series of rejects is submitted to the operator. The automation rate then drops sharply, rending those OCR based methods less cost attractive.

It is therefore an object of the invention to provide a system and method for improving processing of OCR scanned mail.

It is another object of the invention to provide a system and method for creating a cooperative real time link between the operator off-line processes and the main line OCR sequence of process for better handling serial rejects from the main line OCR sequence.

It is yet a further object of the invention to provide such a link which allows the main line OCR sequence to benefit from the teaching of operator inputs regarding a first of a series of rejected mail, for resuming automatic processing of following of the rejected mail in the series.

These and other objects, features and advantages of the invention are accomplished by the system and method for improving processing of OCR scanned mail, disclosed herein.

Such an automatic mail processing is vested with an interactive learning capability. Ambiguous envelope address blocks and information fields are resolved using a unique mode of human/machine interaction that achieves a sustained high rate of automatic mail sortation.

The address box/line find problems are handled by prompting the operator to indicate the address box/line location which is communicated back to the automatic processing routines.

This information is then used for retrying automatic processing on the next sequentially rejected envelope. If the retry succeeds, the same strategy is pursued on the succeeding reject and so forth as long as the 'recovery chain' holds. This process of cooperative operator automated reject recovery provides a major increment in automatic processed throughput in OCR scanned mail.

The invention thus includes a method for improving processing of OCR scanned pieces of mail comprising a main line of automated process and off-lines of manual recovery for said pieces of mail not being recognized in the main line, including applying in off-lines to a current piece of mail, teaching from the previously manually recovered piece of mail, and if retry succeeds, rending the current piece of mail to the main line of process, and if retry does not succeed, prompting a manual recovery of the current piece of mail, memorizing teaching from said manual recovery and rending said current piece of mail to the main line of process.

More particularly, the invention includes a method for improving processing of OCR scanned mail piece having a destination address block including a first routing portion designating at least a destination postal location and a second routing portion designating at least an addressee, comprising the steps of capturing an image of said destination address block at a sending location, marking said mail piece with an identity tag, analyzing said image to generate a first signal representing said destination location, sorting said mail piece at said sending location in response to said first signal for transport to said destination location, transporting said mail piece to said destination location, further analyzing said image to generate a second signal representing said addressee, transmitting said second signal to said destination location, receiving said mail piece at said destination postal location, identifying said mail piece by reading said identity tag, and sorting said mail piece in response to said second signal for delivery to said addressee, wherein said step of analyzing said image to generate a first signal includes the steps of automatically locating useful sorting information in the image using a teaching from the previously processed mail piece, and if automatic location fails, presenting said image to an operator and prompting him to indicate the useful sorting information, and memorizing said location of said useful sorting information as the teaching for the next mail piece to be processed.

These and other objects, features and advantages of the invention will be more fully appreciated with reference to the accompanying figures:
FIG.1 is an example of potentially rejected mail in an OCR based automatic sorting system.
FIG.2 is a system diagram of the invention.
FIG.3 is a functional block diagram of the architecture at a sending location, in accordance with the invention.
FIG.4 illustrates the relationship between the address block on the physical mail piece and the captured image of the address block and the resolved alphanumeric address data.
FIG.5 illustrates sample operator assists at a workstation, in accordance with the invention.
FIG.6, consisting of Figs. 6A, 6B and 6C, is a process flow diagram illustrating the method of the invention as carried out at the sending location.

For explanation sake, the invention will be described in conjunction with the Deferred processing of OCR scanned mail (DOCR) fully explained in already mentioned US Patent 5,031,223. But it will be obvious to the man skilled in the art that the invention can equally be implemented in conjunction with other OCR based mail processes.

The general steps of the invention process are as follows:
1. Mail pieces are input and scanned by a state of the art OCR equipment which resolves the city/state/zip line of the address. This is sufficient to route the letter to a district delivery post office. Each mail piece is then 'bar coded' with an identification number and dispatched to its delivery post office.
2. The image scan of the address block (which contains the remaining 3-4 lines of address information) is captured, compressed and stored on a disk in association with the identification number.
3. While the physical mail pieces are in route to their delivery post offices, (i.e., via truck, train, or plane, or on a dolly within the same post office) their respective address block images are processed off-line in specially configured workstations located either at the sending location or at a remote location.
   In a workstation, each address block image is processed to resolve sortation down to delivery sequence as follows:
   a. Off-line OCR is performed on the remaining 3-4 address lines of the address block in either a workstation or in a LAN server processor.
   b. The address data is reviewed against a Post Knowledge Base. If there are no apparent OCR misreads, then the system will:
      - validate and cross check all the address fields including the recipient,
      - resolve any address ambiguities such as incomplete address, and
      - derive the delivery sequence within a building.
   c. If OCR misreads are encountered, then the system will:
      - perform OCR misread correction using algorithms for spelling correction. The correction candidate information is displayed to the workstation operator along with the original image. The operator makes the final correction decision. This provides advantages over the operator rekeying the address correction, including economy of keystrokes and avoidance of operator errors,
      - make knowledge based disambiguation of incomplete address data.
   4. At the completion of Step 3, all the address data required to machine sort the mail piece down to delivery sequence will have been resolved. The information is then batched by destination post office and transmitted via a high speed telecommunications network to the respective destination post offices.
   5. The address information is re-associated with each physical mail piece when it arrives at the destination post office via the identification number previously bar coded on the envelope. The physical mail piece and its sortation information hence 'come together': the sorting is completed down to delivery sequence.
   6. At steps 1 and 3, when no address field was discerned in the image scan, or when a candidate address field was found, but it was failed to locate the city, state, zip, street, etc...fields, then: after the operator on a workstation has completed manual address entry, he is queried to indicate (for example via cursor positioning) the location of the address component that the automatic means failed to find. This location information is memorized and used to coordinate processing of the image scan for the envelope having the next identification number in ascending order.

Operational refinements that can be overlaid on the process can be found in US Patent 5,031,223.

Turning now to the figures, FIG.1 is an example of potentially rejected mail in an OCR based automatic sorting system. Indeed the upper envelope shows a lot of extraneous information adjacent to the address field that could prevent automatic means to discern the latter address field.

The second envelope shows a frequent case where within the address field, useless information is being mixed by the mailer with information useful for sorting, and the automatic means could be misled as to where the latter useful information lies.

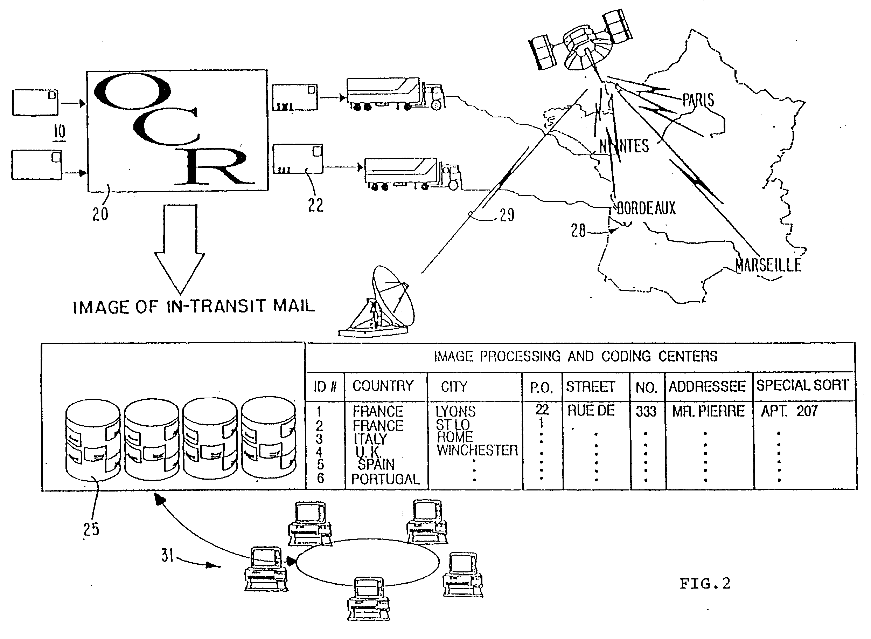

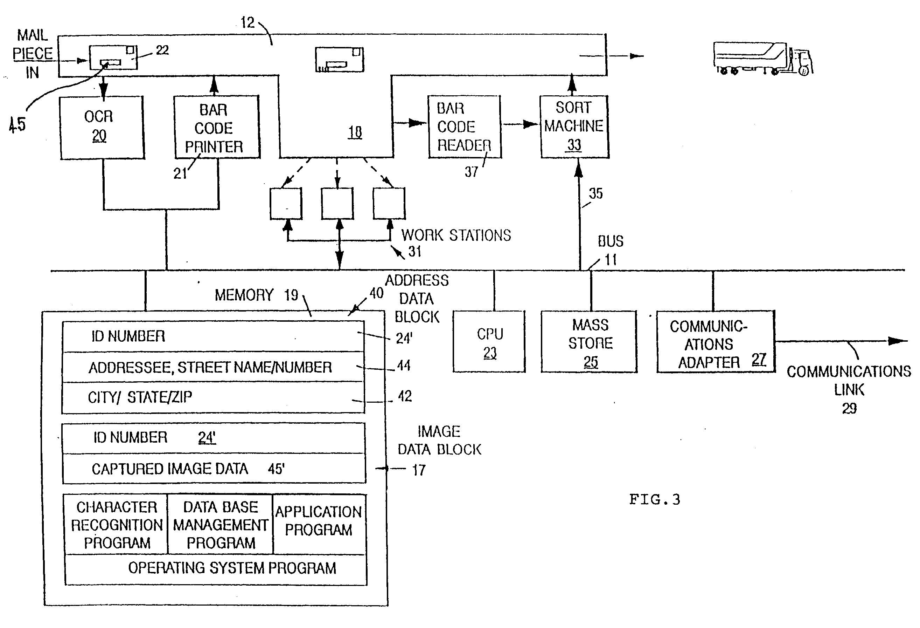

FIG.2 is an overall system diagram of the invention and FIG.3 is an architectural diagram of a sending location 10. Mail pieces which originate at the sending location 10 are read through an Optical Character Recognition machine (OCR) 20. FIG.3 illustrates a physical mail piece 22 which has a destination address block 45 which includes a city/state/zip address data field, and an addressee, street name and street number data field. The OCR 20 scans the physical mail piece 22 and captures an image 45' of the address block as a two-dimensional array of picture elements in a bit plane. The captured image 45' includes an image of the city/state/zip information, and further contains an image of the addressee, street name and street number information. The OCR 20 attempts to resolve the image of the city/state/zip information into an alphanumeric character string of resolved address data 42, and the system defers the resolution of the image of the addressee, street name and street number information until later. The case when the image of the city/state/zip cannot be automatically resolved will be described further.

Again on FIG.3 can be seen that a locally originated mail piece is input to a conveyor 12 and passes beneath the OCR 20 where it is scanned. The mail piece then continues on the conveyor belt and a bar code printer 21 prints a serial number onto the mail piece 22. In its normal operation, OCR 20 will read the second portion of the address block 45 consisting of the city, state, country and zip code destination, and will enter this into the resolved address data block 40 in a memory 19. As already explained, the case when automatic resolution of address block 45 is not possible will be described further.

The data processing system includes a CPU 23 which is connected by means Of a bus 11 to the memory 19, the OCR 20 and the bar code printer 21. The system further includes workstations 31, bar code reader 37, sorting machine 33 connected by connection 35, mass storage 25 and communications adapter 27 all interconnected by system bus 11. The communications adapter 27 communicates over communications link 29 to a receiving location 28 or an offline or remote processing system as explained in already mentioned US Patent 5,031,223.

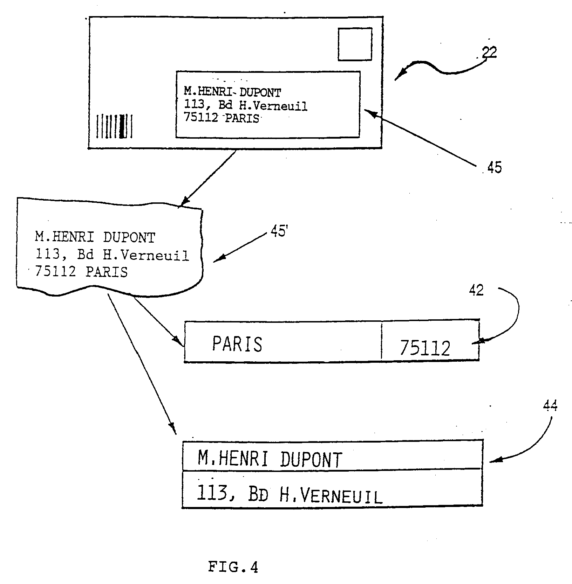

The resolved address data block 40 shown in FIG.3 has two portions, the first portion 42 stores the resolved alphanumeric string for the city, state, zip code or country as was recognized by the OCR 20 in its scanning operation. A second portion 44 of the resolved address data block will contain the resolved addressee and street name and street number information which will eventually be output during the course of the operation (see also FIG.4).

The resolved city, state, zip code and/or country information in portion 42 of the resolved address data block 40 is output to the sorting machine 33 and is used to physically sort the mail piece 22 into an appropriate pocket in the sorting machine. The physical pocket in the sorting machine 33 is associated with a particular mode of transportation, whether by airplane, truck, train or other mail transportation medium, which is destined to the city, state and country named in the destination address block 45.

As the mail piece 22 passes out of the OCR 20, the bar code printer 21 prints a bar code representing an identification number 24' which will allow the mail piece 22 to be re-associated with the information in the resolved address data block 40. That re-association is made at the receiving location 28 for the mail piece, where the resolved addressee, street name and street number information 44 can be associated with a particular mail piece 22 by the identity of the identification number 24'.

When the mail piece 22 is scanned by the OCR 20, the captured image 45' is stored as a two-dimensional bit plane of picture elements in the mass storage 25, which can be for example a large capacity magnetic DASD. The image 45' is stored in conjunction with its identification number 24' as an image data block 17, and is accessible by its identification number. That same identification number 24' is also another portion of the resolved address data block 40, to facilitate accessing thereof. Still further, that identification number 24' is imprinted by the bar code printer 21 as the bar code onto the face of the mail piece 22.

If the image of the captured image 45' of the address block is successfully resolved, then the city, state, zip and country information can be output by the OCR 20 in conjunction with the CPU 23 to the sort machine 33 to physically sort the mail piece.

Prioritization in the operation based upon the estimated travel time for locally or remotely destined mail pieces can be performed according to already mentioned US Patent 5,031,223.

If instead, the image of the captured image 45' containing the city, state, zip and/or country information is not successfully recognized, then the CPU 23 directs the conveyor 12 to send the mail piece 22 to a reject tray 18, mail piece 22 still having the bar code 24 imprinted thereon with the identification number. Thereafter, by further data processing analysis and/or by additional operator intervention and interpretation according to procedures described in US Patent 5,031,223, the unresolved portions of the city/state/zip/country codes in the image can be determined and input to the portion 42 of the resolved data block 40.

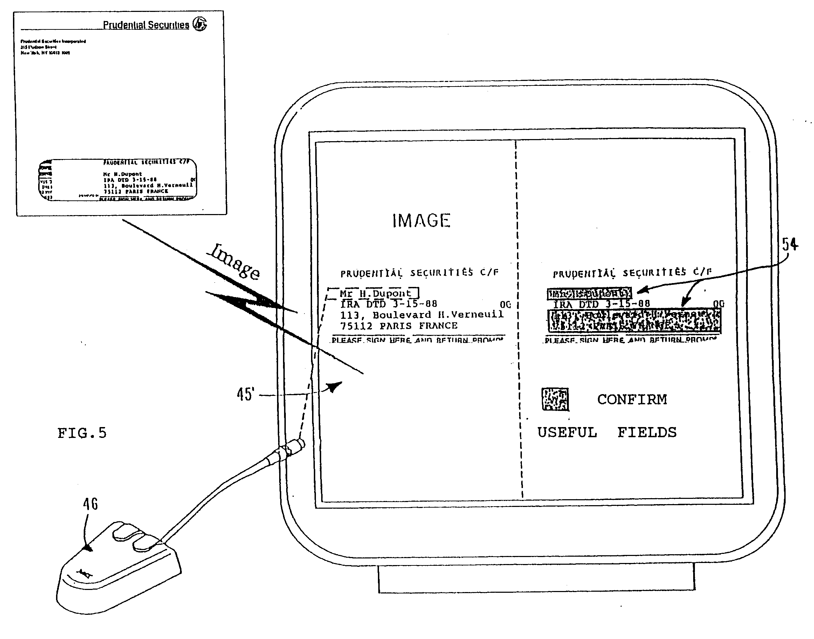

The present invention introduces a supplementary procedure to the above, where the operator is queried to indicate, for example via cursor positioning, the location of the address component that the system in automatic mode failed to find. Such a procedure is described with respect to FIG.5.

On a workstation 31, an operator is enabled to designate with a mouse 46, portions of the image 45' that contain useful information 54 for mail sorting. In another embodiment of the invention, the operator is enabled to blot out extraneous information adjacent to useful information.

Useful information can be the location of the destination address block, or location of only part of the block (such as the city/state/zip data field, or the addressee, street name and street number data field).

Such a location information is transferred from a workstation 31 to the CPU 23 and memorized.

Thereafter, all mail, having been held in the tray 18 or not, can be fed into the bar code reader 37 associated with the sorting machine 33, for the identification number to be read. That number is then associated by the CPU 23 with the corresponding resolved address data block 40 and the information in the portion 42 can be accessed to control the sort machine 33. The sort machine 33 can then properly sort the mail piece 22 into the appropriate transport: after the first sorting operation at the sending location 10, the mail piece 22 is physically loaded onto a carrier and transported to the postal destination 28.

Off-line or remote processing, as already mentioned, allows to resolve the addressee, street name and street number information image in each captured image 45' of the address block stored on the mass storage device 25.

This information, if resolved, will then be entered as alphanumeric data into the portion 44 of the resolved address data block 40. This operation is carried out by the CPU 23 using character recognition algorithms and knowledge base verification information.

If not resolved, and according to the invention, the teaching of operator inputs fed back from workstation 31 to CPU 23, regarding useful fields in the preceding rejected mail, are used to try again and solve the addressee, street name and street number information image in the captured image.

If this process succeeds, the same strategy is pursued on the mail with following identification numbers, until the 'recovery chain' fails.

Any of the remote facilities can also benefit from the above teaching while in the resolution process.

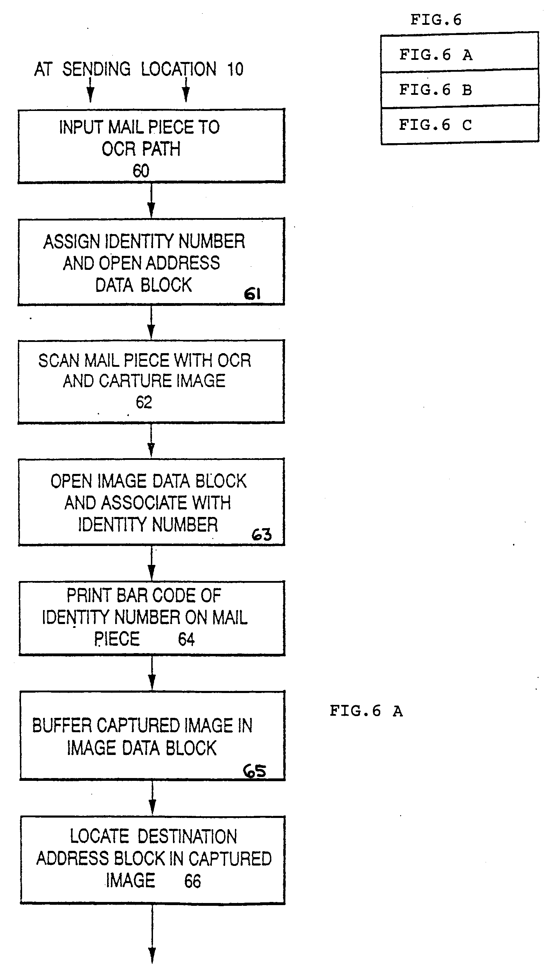

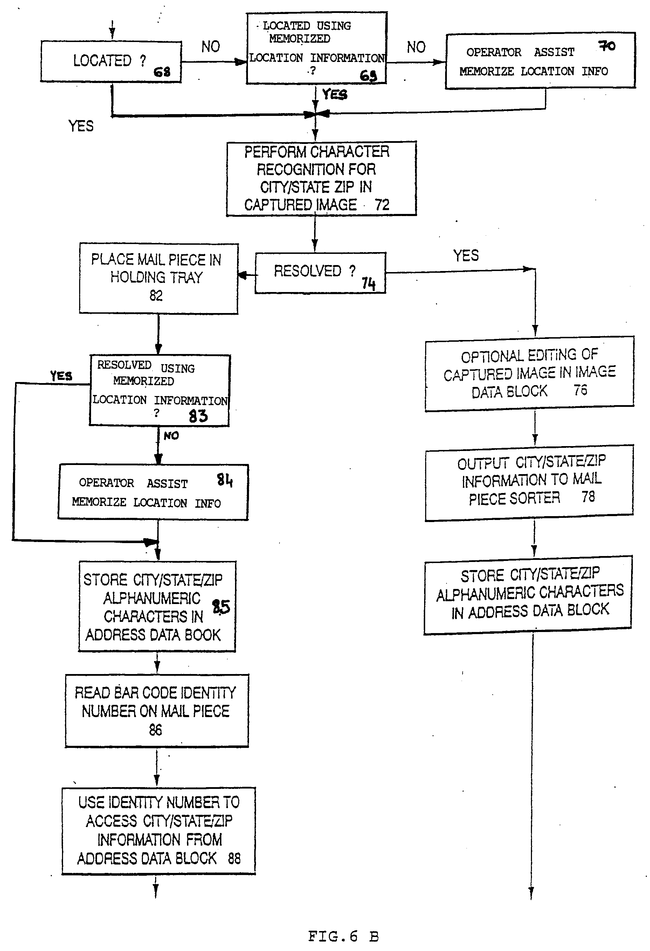

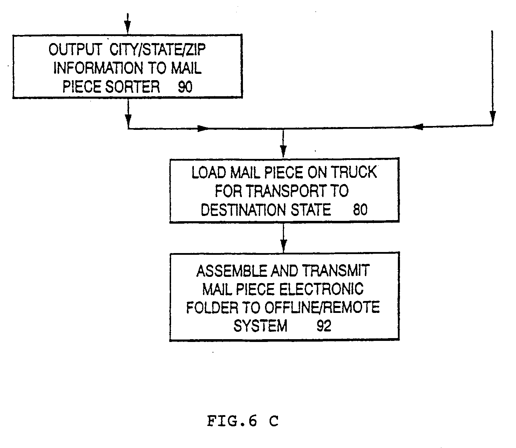

FIG.6, consisting of FIG.6A, 6B and 6C, is a sequence of method steps performed at the sending location 10 to process an incoming mail piece in the system shown in FIG.2. At step 60, a mail piece is input to the conveyor 12 and at step 61, an identification number is assigned to the mail piece and an address data block is created. Then in step 62, the mail piece is scanned by the OCR 20 and the image 45' is captured and stored in an image data block 17 of the memory 19 (step 63). Then in step 64, the bar code printer 21 prints the identification number 24' on the mail piece 22. The image 45' of the mail piece is buffered in the memory 19 and optionally in the mass store 25 (step 65). The CPU 23 then in step 66, attempts to locate the address block in the captured image 45'. In step 68, if the address block is located, then the process passes to step 72. However, if the address block has not been located, then at step 69, another attempt is made by CPU 23, using the teaching from operator inputs regarding useful fields on the face of the envelope having the preceding identification number. If this new attempt succeeds, then the process passes to step 72. However, if it fails, in step 70, an operator at one of the workstations 31 will assist in locating the address block, according to procedures described in US Patent 5,031,223, then will be queried according to the invention, to indicate (for example via cursor positioning) the location of the address component that the automatic means failed to find (see FIG.5). This location information is memorized and will be used to coordinate processing of the image scan for the envelope having the next identification number in ascending order. Then, a branch is made to step 72.

There, an attempt is made to resolve the image portion for the city/state and zip code. In step 74, if the city/state/zip code image is resolved, then the process passes to step 76 where optional editing of the image data can be performed and then the resolved alphanumeric string for the city/state and zip are buffered in portion 42 of the address data block 40 and are also output to the mail sorting machine 33 (step 78) to sort the mail piece on the conveyor 12. Branch is then made to step 80.

However, if the city/state/zip code image is not resolved, then the process flows to step 82 where the mail piece 22 is stored in the temporary holding tray 18. Then then at step 83, another attempt is made by CPU 23, using the teaching from operator inputs regarding useful fields on the face of the envelope having the preceding identification number. If this new attempt succeeds, then the process passes to step 85. However, if it fails, in step 84, an operator at one of the workstations 31 will assist in locating the address block, according to procedures described in US Patent 5,031,223, then will be queried according to the invention, to indicate (for example via cursor positioning) the location of the address component that the automatic means failed to find (see FIG.5). This location information is memorized and will be used to coordinate processing of the image scan for the envelope having the next identification number in ascending order. Then, a branch is made to step 85.

At step 85, the city/state/zip code information is stored in the portion 42 of the address data block 40. In step 86, the mail piece exits the holding tray 18 and the bar code reader reads the identification number for the mail piece and uses the identification number in step 88 as the address for accessing the city/state/zip information from portion 42 of the address data block 40 in the memory 19 and this information is then output in step 90 to the mail piece sorting machine 33 to sort the mail piece on the conveyor belt 12.

In step 80, the sorted mail piece is transferred from the conveyor belt 12 to the transport for physical transportation to the destination location 28. Then the process flows to step 92 where a mail piece electronic folder is assembled and handled according to US Patent 5,031,223.

It will be obvious to the man skilled in the art that the system as described in the present invention implemented at a sending location, can equally be applied to the automatic processing that can take place at remote/off-line locations.

## Claims

1. A method for improving processing of OCR scanned mail piece (22) having a destination address block including a first routing portion (42) designating at least a destination postal location (28) and a second routing portion (44) designating at least an addressee, comprising the steps of:
capturing an image (45') of said destination address block at a sending location (10),
marking said mail piece with an identity tag,
analyzing said image to generate a first signal representing said destination location,
sorting said mail piece at said sending location in response to said first signal for transport to said destination location,
transporting said mail piece to said destination location,
further analyzing said image to generate a second signal representing said addressee,
transmitting (29) said second signal to said destination location,
receiving said mail piece at said destination postal location, identifying said mail piece by reading said identity tag, and sorting said mail piece in response to said second signal for delivery to said addressee,
said method being characterized in that said step of analyzing said image to generate a first signal includes the steps of:
automatically locating useful sorting information in the image using a teaching from the previously processed mail piece, and if automatic location fails, presenting said image to an operator and prompting him to indicate useful sorting information,
memorizing said location of said useful sorting information as the teaching for the next mail piece to be processed.

2. The method of claim 1, further characterized in that the step of prompting the operator includes allowing him to point at said useful sorting information.

3. The method of claim 1, further characterized in that the step of prompting the operator includes allowing him to blot out useless sorting information.

4. A method for improving processing of OCR scanned pieces of mail comprising a main line of automated process and off-lines of manual recovery for said pieces of mail not being recognized in the main line, said method being characterized in that it also comprises:
applying in off-lines to a current piece of mail, teaching from the previously manually recovered piece of mail, and if retry succeeds, rending the current piece of mail to the main line of process, and if retry does not succeed, prompting a manual recovery of the current piece of mail, memorizing teaching from said manual recovery and rending said current piece of mail to the main line of process.

5. A system for improving processing of OCR scanned mail piece (22) having a destination address block including a first routing portion (42) designating at least a destination postal location (28) and a second routing portion (44) designating at least an addressee, comprising:
means for capturing an image (45') of said destination address block at a sending location (10),
means for marking said mail piece with an identity tag,
means for analyzing said image to generate a first signal representing said destination location,
means for sorting said mail piece at said sending location in response to said first signal for transport to said destination location,
means for transporting said mail piece to said destination location,
means for further analyzing said image to generate a second signal representing said addressee,
means for transmitting (29) said second signal to said destination location,
means for receiving said mail piece at said destination postal location, identifying said mail piece by reading said identity tag, and sorting said mail piece in response to said second signal for delivery to said addressee,
said system being characterized in that means for analyzing said image to generate a first signal further include:
means for automatically locating useful sorting information in the image using a teaching from the previously processed mail piece, and if automatic location fails, presenting said image to an operator and prompting him to indicate useful sorting information,
means for memorizing said location of said useful sorting information as the teaching for the next mail piece to be processed.

6. The system of claim 5, further characterized in that it includes means for, while prompting the operator, allowing him to point at said useful sorting information.

7. The system of claim 5, further characterized in that it includes means for, while prompting the operator, allowing him to blot out useless sorting information.
